# EUROPÄISCHE PATENTANMELDUNG

(11) **EP 4 137 653 A1**
(43) Veröffentlichungstag der Anmeldung: **22.02.2023**
(21) Anmeldenummer: 22190711.6
(22) Anmeldetag: 17.08.2022
(51) Int. Cl.: E04D 5/06, B32B 7/00, D04H 1/54, B32B 3/26, B32B 5/02, B32B 5/26, B32B 7/02, B32B 27/12, B32B 27/32, E04B 1/62, E04D 12/00

(54) **DACHUNTERSPANNBAHN**

(30) Priorität: 19.08.2021 DE 102021121559
(71) Anmelder: BMI Group Holdings UK Limited, Reading, RG1 1LX (GB)
(72) Erfinder: Schulze, Dirk, 60322 Frankfurt (DE)
(74) Vertreter: Grundmann, Dirk

(57) **Zusammenfassung**

Die Erfindung betrifft eine Dachunterspannbahn mit einer ersten Sperrschicht (2) und einer zweiten Sperrschicht (3), die jeweils eine Durchlässigkeit für Wasserdampf aufweisen, wobei die erste Sperrschicht (2) eine erste Dichtigkeit für flüssiges Wasser aufweist, die höher ist, als eine zweite Dichtigkeit für flüssiges Wasser der zweiten Sperrschicht (3). Erfindungsgemäß ist vorgesehen, dass die erste Dichtigkeit eine geringere Altersstabilität aufweist als die zweite Dichtigkeit, sodass der Wert der Dichtigkeit der ersten Sperrschicht (2) während der Lebensdauer der Dachunterspannbahn unter den Wert der Dichtigkeit der zweiten Sperrschicht (3) fällt.

## Beschreibung

### Gebiet der Technik

Die Erfindung betrifft eine Dachunterspannbahn mit einer ersten Sperrschicht und einer zweiten Sperrschicht, die jeweils eine Durchlässigkeit für Wasserdampf aufweisen, wobei die erste Sperrschicht eine erste Dichtigkeit für flüssiges Wasser aufweist, die höher ist, als eine zweite Dichtigkeit für flüssiges Wasser der zweiten Sperrschicht.

### Stand der Technik

Eine Dachunterspannbahn mit zwei einen Transport für Wassermoleküle, aber eine Durchlässigkeit für flüssiges Wasser aufweisenden Sperrschichten ist aus der EP 0 433 094 B1 bekannt. Zwischen einem unteren Außenvlies und einem oberen Außenvlies erstrecken sich zwei Membranschichten, die mikroporös ausgebildet sind. Zwischen den beiden Membranschichten befindet sich eine Trennlage, welche wasserflüssigkeitsdurchlässig ist.

Die WO 2019/115677 A1 offenbart eine Dachunterspannbahn, die zwei Sperrschichten aufweist, die jeweils aus einem thermoplastischen Polyurethan bestehen. Die beiden Sperrschichten können voneinander verschiedene chemische und physikalische Eigenschaften aufweisen

Die DE 197 54 251 A1 offenbart eine Dachunterspannbahn aus mehreren Folienschichten. Zwischen zwei jeweils Kapillaren aufweisende Schichten, die den Transport von Wasserdampf auf physikalischem Wege ermöglichen, liegt eine Sperrschicht, die den Transport von Wasserdampf auf chemischem Wege ermöglicht. Die den Wasserdampf auf chemischem Wege transportierende Schicht soll aus Polyurethan bestehen, die die Dachunterspannbahn absolut wasserdicht macht. Die beiden anderen Schichten, die den Wasserdampf auf physikalischem Wege transportieren, sollen nicht unbedingt absolut wasserdicht sein. Sie sind geeignet, um die absolut wasserdichte Schicht mit einem Vlies zu verbinden.

Dachunterspannbahnen sind ferner bekannt aus den US 2012/ 0094067 A1, DE 298 05 622 U1 und DE 10 2015 000092 A1.

Die erfindungsgemäße Dachunterspannbahn gehört zur Gattung solcher Folien, die in der Bauwirtschaft verwendet werden, um Bauteile gegenüber der Witterung zu schützen. Die Folien werden z. B. bei Dachkonstruktionen verwendet, um sie vor Feuchtigkeit unterhalb der Eindeckung zu schützen. Die Folien werden vor dem Aufbringen der eigentlichen Dachhaut auf dem Dachstuhl, einer Lattung oder dergleichen aufgebracht und dienen auch als vorläufige Dacheindeckungen, um das Gebäude oder Bauteile gegen Witterung zu schützen. Hierzu ist es erforderlich, dass die Folien zumindest zu Beginn ihrer Lebenszeit eine hohe Dichtigkeit gegenüber flüssigem Wasser aufweisen. Sie schützt dann die Dachkonstruktion vor Regenwasser. Die Folie sollte auch gegenüber Schlagregen dicht sein, bei dem vom Wind beschleunigte Regentropfen gegen die Oberfläche der Folie prallen. Die Folie sollte zumindest zu Beginn ihrer Lebenszeit auch den Kontakt mit Holzschutzmitteln ertragen können, der die Wasserdichtigkeit absenken kann.

Bei Dachunterspannbahn, wie sie zum Stand der Technik gehören, werden verschiedene Flächengebilde, wie Vliese, Gewebe, Gelege oder monolithische Folien verwendet. Um Folien wasserdampfdurchlässig zu machen, können durch Verstrecken Mikroporen erzeugt werden. Derartige mikroporöse Filme können eine hohe Dichtigkeit gegen flüssiges Wasser aufweisen. Es können auch spezielle polymere Werkstoffe verwendet werden, die aufgrund ihrer chemischen Beschaffenheit eine hohe Affinität für Wassermoleküle haben. Derartige monolithische Schichten ermöglichen einen chemischen Transport des Wasserdampfes. Ferner werden Vliesstoffe mit sehr feinen Fasern verwendet, beispielsweise Meltblown-Vliese, die aber eine geringere Dichtigkeit gegenüber flüssigem Wasser aufweisen, aber eine höhere Alterungsstabilität besitzen, als beispielsweise mikroporöse Filme. Allgemein stehen sich die Eigenschaft der Dichtigkeit für flüssiges Wasser und die Langlebigkeit entgegen, wenn eine Dachunterspannbahn unter Kostengesichtspunkten zu beurteilen ist. Monolithische Schichten haben eine höhere Altersbeständigkeit als mikroporöse Filme, sind aber teurer. Auch die Materialstärke einer Schicht kann die Dichtigkeit für flüssiges Wasser erhöhen, was unter Kostengesichtspunkten unerwünscht ist. Die Verwendung von mikroporösen Schichten oder Faserverbunden ermöglicht zwar eine besonders hohe Wasserdampfdurchlässigkeit, jedoch stellen diese im mikroskopischen Maßstab keine geschlossenen Schichten dar. Faserverbunde erreichen kein ausreichendes Maß an Wasserdichtigkeit und Luftdichtigkeit, um den oben genannten Anforderungen zu genügen. Bei mikroporösen Schichten wird häufig nicht die geforderte Alterungsbeständigkeit erreicht. Eine Dachunterspannbahn sollte für die übliche Lebensdauer eines Daches, also mindestens etwa 30 Jahre eine ausreichend hohe Dichtigkeit gegenüber flüssigem Wasser behalten. Eine Dachunterspannbahn sollte darüber hinaus auch über eine Freibewitterungszeit von einigen Wochen eine ausreichend hohe Dichtigkeit für flüssiges Wasser behalten. Insbesondere in den Sommermonaten kann es hier aufgrund der erhöhten UV-Einstrahlung zu einer schnelleren Alterung kommen.

### Zusammenfassung der Erfindung

Der Erfindung liegt die Aufgabe zugrunde, eine Dachunterspannbahn anzugeben, die zumindest zu Beginn ihrer Lebenszeit eine hohe Dichtigkeit gegenüber flüssigem Wasser aufweist, die zumindest über die Lebensdauer eines Dachs aber eine ausreichend hohe Dichtigkeit gegenüber flüssigem Wasser behält und kostengünstig herstellbar ist.

Gelöst wird die Aufgabe durch die in den Ansprüchen angegebene Erfindung, wobei die Unteransprüche nicht nur vorteilhafte Weiterbildungen der im Hauptanspruch angegebenen Dachunterspannbahn darstellen, sondern auch eigenständige Lösungen der Aufgabe sind.

Zunächst und im Wesentlichen wird vorgeschlagen, dass die Dachunterspannbahn zwei Sperrschichten aufweist, die sich qualitativ hinsichtlich ihres zeitlichen Verlaufs der Dichtigkeit für flüssiges Wasser unterscheiden. Die erste Sperrschicht besitzt zu Beginn ihrer Lebenszeit eine hohe erste Dichtigkeit gegenüber flüssigem Wasser, die größer ist, als eine zweite Dichtigkeit der zweiten Sperrschicht gegenüber flüssigem Wasser. Die Dichtigkeit der ersten Sperrschicht fällt über die Zeit steiler ab, als die Dichtigkeit der zweiten Sperrschicht. In der Bauphase eines Gebäudes bestimmt die Dichtigkeit der ersten Sperrschicht die Gesamtdichtigkeit der Dachunterspannbahn hinsichtlich flüssigen Wassers. Insbesondere während einer Zeit der freien Bewitterung, in der die Dachunterspannbahn der UV-Strahlung ausgesetzt ist, kann die Dichtigkeit der ersten Sperrschicht abnehmen. Die zweite Sperrschicht unterscheidet sich gegenüber der ersten Sperrschicht insbesondere darin, dass ihre Dichtigkeit gegenüber flüssigem Wasser geringer ist, die Dichtigkeit aber in erheblich geringerem Maße im Laufe der Zeit abfällt. Die zweite Sperrschicht kann insbesondere eine höhere UV-Stabilität als die erste Sperrschicht aufweisen. Die beiden Sperrschichten können sich somit durch die zeitliche Ableitung ihrer Dichtigkeitswerte hinsichtlich der Dichtigkeit gegenüber flüssigem Wasser unterscheiden. Eine Kurve, die die Dichtigkeit der Schicht gegenüber flüssigem Wasser gegenüber der Zeit darstellt, fällt betreffend die erste Schicht erheblich stärker ab, als betreffend die zweite Schicht, sodass der Absolutwert der zeitlichen Ableitung der Dichtigkeit der ersten Schicht größer ist als der der zweiten Schicht. Die beiden Kurven können sich nach einer gewissen Zeit schneiden, wobei diese Zeit größer ist, als die übliche Zeit, in der eine Dachunterspannbahn in der Bauphase der freien Witterung ausgesetzt ist. Vor diesem Zeitpunkt hat die erste Schicht eine größere Dichtigkeit gegenüber flüssigem Wasser als die zweite Schicht. Nach diesem Zeitpunkt hat die zweite Schicht eine größere Dichtigkeit gegenüber flüssigem Wasser als die erste Schicht. Bei der erfindungsgemäßen Dachunterspannbahn übernimmt somit in einer Anfangsphase die erste Schicht die Funktion der Wassersperre und danach die zweite Schicht. Beide Schichten sind aber über ihre gesamte Lebenszeit durchlässig für Wasserdampf, sodass Wasserdampf von der Innenseite des Gebäudes durch die Dachunterspannbahn nach außen abgegeben werden kann. Die zeitliche Abnahme der ersten Dichtigkeit der ersten Sperrschicht hängt im Wesentlichen von den Witterungsbedingungen ab, denen die Dachunterspannbahn ausgesetzt ist. Ist beispielsweise die Dachunterspannbahn keiner Freibewitterung ausgesetzt, weil das mit der Dachunterspannbahn versehene Dach unmittelbar nach dem Aufspannen der Dachunterspannbahn eingedeckt wird, so kann der Wert der Dichtigkeit der ersten Sperrschicht über bis zu 10 Jahre größer sein, als der Wert der Dichtigkeit der zweiten Sperrschicht. Die beiden Sperrschichten können aber so eingestellt sein, dass auch bei einer fehlenden Freibewitterung der Wert der Dichtigkeit gegenüber flüssigem Wasser der ersten Sperrschicht innerhalb eines Jahrzehntes unter den Wert der Dichtigkeit der zweiten Sperrschicht absinkt. Bei einer Freibewitterung der Dachunterspannbahn im Winter kann der Wert der ersten Dichtigkeit bereits nach 6 Monaten unter den Wert der zweiten Dichtigkeit absinken. Aufgrund der erheblich höheren UV-Bestrahlung im Sommer kann dieser Zeitpunkt bereits nach 3 Monaten erreicht sein.

Die beiden Sperrschichten können sich hinsichtlich ihrer chemischen Zusammensetzung, ihres mechanischen Aufbaus oder hinsichtlich ihrer Schichtdicke unterscheiden. Es kann insbesondere vorgesehen sein, dass die erste Sperrschicht ein mikroporöser Film ist oder aufgrund seiner chemischen Beschaffenheit eine hohe Affinität für Wassermoleküle besitzt, also beispielsweise eine monolithische Schicht ist. Bevorzugt ist ein mikroporöser Film. Die zweite Sperrschicht kann aus einem Meltblown-Vlies bestehen. Sie kann von einem Vliesstoff gebildet sein. Die beiden Sperrschichten können aus einem polymeren Werkstoff, einem Polyolefin, Polypropylen oder Polyethylen bestehen. Es ist ferner vorgesehen, dass die Dachunterspannbahn ein Deckvlies oder zwei Deckvliese aufweist. Die Deckvliese bilden die äußeren Oberflächen der Dachunterspannbahn. Die beiden Sperrschichten können somit zwischen zwei Deckschichten jeweils aus einem Vlies, insbesondere einen Spunbond-Vlies, angeordnet sein. In einer Weiterbildung der Erfindung ist vorgesehen, dass die Dachunterspannbahn darüber hinaus eine Stabilisierungsschicht, beispielsweise aus einem Gittergewebe, aufweist. Das Gittergewebe kann ebenfalls zwischen den beiden Deckvliesen angeordnet sein. In einer Weiterbildung der Erfindung kann vorgesehen sein, dass zwischen den beiden Sperrschichten eine Trennschicht, beispielsweise in Form eines Spunbond-Vlieses, angeordnet ist. Eine Dachunterspannbahn kann den folgenden Schichtaufbau aufweisen: Unmittelbar unterhalb einer oberen Deckschicht befindet sich die erste Sperrschicht. Unmittelbar darunter befindet sich die zweite Sperrschicht. Unmittelbar darunter befindet sich die zweite Deckschicht. Bei einer Variante befindet sich unmittelbar unter der oberen Deckschicht die zweite Sperrschicht. Unmittelbar darunter befindet sich die erste Sperrschicht. Unmittelbar darunter kann sich eine Stabilisierungsschicht befinden. Unmittelbar unter der Stabilisierungsschicht oder unmittelbar unter der ersten Sperrschicht kann sich eine andere Deckschicht befinden. Bei einer weiteren Variante, die ansonsten die Eigenschaft der zuvor beschriebenen Varianten aufweist, erstreckt sich zwischen der ersten Sperrschicht und der zweiten Sperrschicht eine Trennschicht, beispielsweise aus einem Spunbond-Vlies. Es können auch weitere Sperrschichten vorgesehen sein. Die Durchlässigkeit für flüssiges Wasser beziehungsweise die Undurchlässigkeit oder Dichtigkeit der Sperrschichten kann als hydrostatischer Druck angegeben werden (Höhe einer Wassersäule, die die Schicht aushält, bevor es Leckagen zeigt). Dieses ist messbar nach DIN EN 20811. Für die zweite Sperrschicht sind Werte etwa zwischen 500 mm und 1500 mm Wassersäule vorgesehen. Sie sind ausreichend. Für die erste Sperrschicht können die Werte oberhalb von 1500 mm liegen, weil hier die direkte Einwirkung von Regen zu berücksichtigen ist. Während die Dichtigkeit gegenüber flüssigem Wasser der ersten Sperrschicht bei einer Freibewitterung bereits nach einigen Monaten und unter einer Dachhaut bereits nach einigen Jahren um mindestens 50 % oder 70 % abnehmen kann, kann die Dichtigkeit der zweiten Sperrschicht gegenüber flüssigem Wasser über ein Jahrzehnt um maximal etwa 10 % oder 20 % absinken. Die Trennschicht und die Deckvliese weisen eine erheblich geringere Dichtigkeit gegenüber flüssigem Wasser auf. Ihre Wassersäule beträgt unter 100 mm.

Die Dachunterspannbahn ermöglicht eine gegenüber dem Stand der Technik vergrößerte Lebensdauer in Bezug auf die üblicherweise bei der natürlichen Alterung beobachteten Einflüsse, wie UV-Strahlung und Temperaturbelastung, bei gleichzeitig sehr hoher Wasserdampf-Durchlässigkeit und ausreichender Dichtigkeit gegenüber flüssigem Wasser. Die erfindungsgemäße Dachunterspannbahn ist als mehrlagiges Laminat ausgebildet, wobei die oberste und die untersten Lage jeweils aus einem Vlies oder einem Gewebe bestehen können. Diese dienen zum einen dem Schutz der innenliegenden Sperrschichten. Zum anderen sorgen sie auch für eine ausreichende Reißfestigkeit und Abriebfestigkeit der Dachunterspannbahn. Zwischen diesen Vlieslagen befinden sich mindestens zwei Sperrschichten. Es können weitere Lagen, insbesondere Vlieslagen, vorgesehen sein. Die erste Sperrschicht bewirkt, dass die Dachunterspannbahn, insbesondere im neuwertigen Zustand und während der Zeit der freien Bewitterung, eine sehr hohe Dichtigkeit gegen direkte Einwirkung von Regenwasser hat. Dies ist insbesondere die Zeit der Bauphase des Daches, während der die Dacheindeckung, also die Ziegel, Dachsteine, das Metall oder der Schiefer noch nicht verlegt worden ist und somit die Dachunterspannbahn direkt dem Wetter ausgesetzt ist. Während dieser Bauphase übernimmt die Dachunterspannbahn die Funktion einer Behelfsdeckung. Die erste Sperrschicht ist so ausgestaltet, dass sie im Vergleich zu den übrigen Lagen eine begrenzte Alterungsstabilität aufweist. Es ist vorgesehen, dass sie ihre hohe Wasserdichtigkeit über längere Zeit verliert. Die zweite Sperrschicht hat hingegen eine besonders hohe Widerstandsfähigkeit gegen Alterung und behält ihre im Vergleich zur ersten Sperrschicht nur geringe Durchlässigkeit für flüssiges Wasser über viele Jahre oder Jahrzehnte. Die erfindungsgemäße Dachunterspannbahn ändert daher ihr Verhalten langsam über die Zeit und insbesondere über die Jahre, wobei es die hohe anfängliche Wasserdichtheit verliert, aber eine mittlere Wasserdichtheit behält. Die mittlere Wasserdichtheit bleibt über die gesamte Lebensdauer der Dachunterspannbahn erhalten. Im fertiggestellten Dach befindet sich die Dachunterspannbahn in der Regel unterhalb einer Dacheindeckung. Diese Dacheindeckung ist die primäre wasserführende Schicht, was bedeutet, dass die Menge an Regenwasser, die von der Dachunterspannbahn abgehalten werden muss, um die Dachkonstruktion zu schützen, beschränkt ist auf kleinere Wassermengen, die beispielsweise durch Wind oder Beschädigungen die Dacheindeckung durchdringen können. Hierfür ist die hohe anfängliche Dichtigkeit der Dachunterspannbahn nicht mehr erforderlich.

Als besonders vorteilhaft wirkt sich aus, dass das natürliche Alterungsverhalten der ersten Sperrschicht nicht an sämtlichen Stellen ihrer Fläche gleichzeitig zu Schäden führt. Vielmehr verliert die Sperrschicht überall dort zuerst ihre Dichtigkeit, wo Unregelmäßigkeiten bei der Fertigung, beispielsweise Produktionstoleranzen, eine Dünnstelle, Fehlstellen oder Füllstoffpartikel hinterlassen haben. Bei einer einzelnen Sperrschicht würde Derartiges sofort zum Versagen der Funktion durch eine Leckage führen. Der Verbund aus zwei Sperrschichten vermindert diese Gefahr. Selbst wenn die zweite Sperrschicht lokal ihre Funktion verlieren würde, würde die alternde erste Sperrschicht immer noch graduell eine Wasserdichtigkeit herstellen.

### Kurze Beschreibung der Zeichnungen

Ausführungsbeispiele der Erfindung werden nachfolgend anhand beigefügter Zeichnungen erläutert. Es zeigen:
- Fig. 1: ein erstes Ausführungsbeispiel der Erfindung in Form eines Ausschnitts aus einer Dachunterspannbahn,
- Fig. 2: ein zweites Ausführungsbeispiel der Erfindung,
- Fig. 3: ein drittes Ausführungsbeispiel der Erfindung und
- Fig. 4: schematisch den zeitlichen Verlauf der Abnahme der Dichtigkeit der ersten Folie A und der zweiten Folie B gegenüber flüssigem Wasser.

### Beschreibung der Ausführungsformen

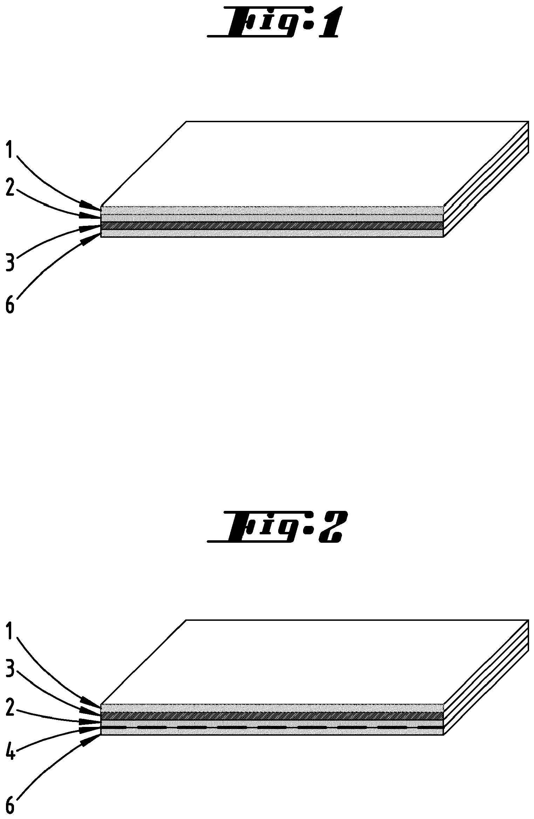

Das erste, in der Figur 1 dargestellte Ausführungsbeispiel ist eine Dachunterspannbahn mit einem vierschichtigen Aufbau. Unterhalb einer Deckschicht 1, die ein Spunbond-Vlies ist, befindet sich eine erste Sperrschicht 2 mit einer hohen Wasserdichtigkeit aber geringen Altersbeständigkeit, die ein mikroporöser Film ist. Unterhalb der ersten Sperrschicht 2 befindet sich eine zweite Sperrschicht 3 mit einer geringeren Wasserdichtigkeit, aber einer größeren Altersbeständigkeit, die von einem Meltblown-Vlies ausgebildet ist. Zuunterst weist die Dachunterspannbahn eine zweite Deckschicht 6 auf, die wiederum ein Spunbond-Vlies ist.

Das in der Figur 2 dargestellte Ausführungsbeispiel besitzt einen fünfschichtigen Aufbau. Zwischen den beiden Deckschichten 1 und 6, die jeweils von einem Spunbond-Vlies ausgebildet sind, befindet sich als zweite Sperrschicht 3 ein Meltblown-Vlies. Darunter befindet sich als erste Sperrschicht 2 ein mikroporöser Film. Zwischen erster Sperrschicht 2 und Deckschicht 6 befindet sich eine Stabilisierungsschicht 4, die als Gittergewebe ausgeführt ist.

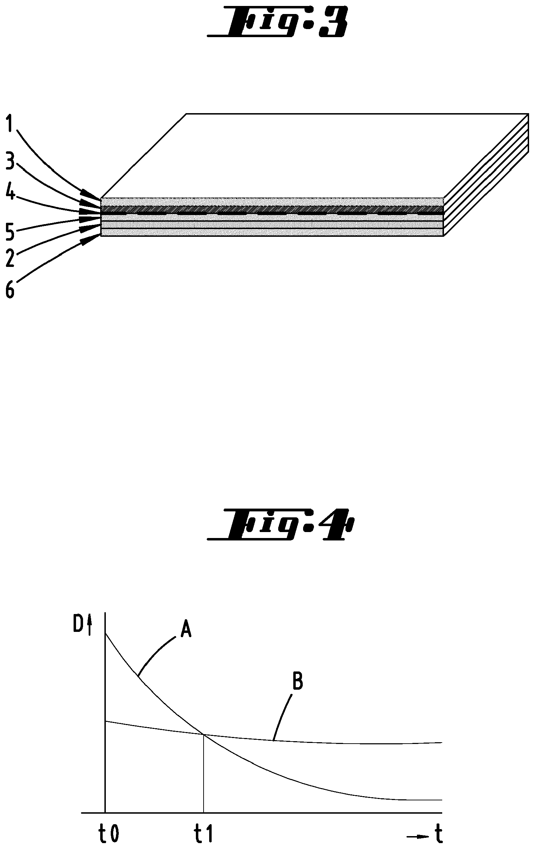

Das in der Figur 3 dargestellte Ausführungsbeispiel besitzt einen sechsschichtigen Aufbau. Die äußeren freien Breitseitenflächen der Dachunterspannbahn werden jeweils von einer Deckschicht 1, 6 aus einem Spunbond-Vlies gebildet. Dazwischen befindet sich unterhalb des Spunbond-Vlieses 1 als zweite Sperrschicht 3 ein Meltblown-Vlies. Oberhalb des unteren Spunbond-Vlieses 6 befindet sich als erste Sperrschicht ein mikroporöser Film. Zwischen der ersten Sperrschicht 2 und der zweiten Sperrschicht 3 befindet sich ein Gittergewebe als Stabilisierungsschicht 4 und ein Spunbond-Vlies als Trennschicht 5.

Die Figur 4 zeigt die unterschiedlichen Verläufe der Dichtigkeit für flüssiges Wasser der beiden Sperrschichten 2, 3 über die Zeit. Die mit A bezeichnete Kurve stellt den zeitlichen Verlauf der Dichtigkeit der ersten Sperrschicht 2 und die mit B bezeichnete Kurve den zeitlichen Verlauf der Dichtigkeit der zweiten Sperrschicht 3 dar. Die Dichtigkeit der ersten Sperrschicht 2 (Kurve A) besitzt zum Zeitpunkt t0 des Beginns der Lebenszeit der Dachunterspannbahn eine höhere Dichtigkeit D, als die zweite Sperrschicht 3 (Kurve B). Die Dichtigkeit der ersten Sperrschicht 2 nimmt aber in einem stärkeren Maße über die Zeit ab, als die Dichtigkeit der zweiten Sperrschicht 3. Zu einer Zeit t1, die bei einer Freibewitterung typischerweise 3 Monate bis 6 Monate betragen kann, und die ansonsten 2 bis 10 Jahre betragen kann, fällt die Dichtigkeit der ersten Sperrschicht 2 unter den Wert der zweiten Sperrschicht 3, sodass ab diesem Zeitpunkt t1 die erste Sperrschicht 2 eine geringere Dichtigkeit für flüssiges Wasser aufweist, als die zweite Sperrschicht 3. Mathematisch gesehen sind die zeitlichen Ableitungen der Dichtigkeit der beiden Sperrschichten 2, 3 dahingehend verschieden, dass der Absolutwert der ansonsten negativen Ableitung der Dichtigkeit der ersten Sperrschicht größer ist, als der Absolutwert der ebenfalls ansonsten negativen Ableitung der Dichtigkeit der zweiten Sperrschicht.

Die Sperrschichten 2, 3 können aus verschiedenen Materialien bestehen, insbesondere aus Polypropylen oder Polyethylen und können auch Hydrophobierungsmittel enthalten, um die Wasserdichtigkeit zu erhöhen.

Die vorstehenden Ausführungen dienen der Erläuterung der von der Anmeldung insgesamt erfassten Erfindungen, die den Stand der Technik zumindest durch die folgenden Merkmalskombinationen jeweils auch eigenständig weiterbilden, wobei zwei, mehrere oder alle dieser Merkmalskombinationen auch kombiniert sein können, nämlich:

Eine Dachunterspannbahn, die dadurch gekennzeichnet ist, dass die Altersstabilität der ersten Dichtigkeit geringer ist, als die Altersstabilität der zweiten Dichtigkeit.

Eine Dachunterspannbahn, die dadurch gekennzeichnet ist, dass die erste Sperrschicht 2 und die zweite Sperrschicht 3 sich hinsichtlich ihrer chemischen Zusammensetzung, ihres mechanischen Aufbaus und/oder hinsichtlich ihrer Schichtdicke unterscheiden.

Eine Dachunterspannbahn, die dadurch gekennzeichnet ist, dass die erste Dichtigkeit während der bestimmungsgemäßen Verwendung der Dachunterspannbahn unter die zweite Dichtigkeit absinkt, wobei insbesondere bei einer Freibewitterung im Sommer die erste Dichtigkeit nach spätestens 3 Monaten unter die zweite Dichtigkeit, bei einer Freibewitterung im Winter spätestens nach 6 Monaten unter die zweite Dichtigkeit und ansonsten innerhalb des ersten Jahrzehnts der Verwendung unter die zweite Dichtigkeit absinkt.

Eine Dachunterspannbahn, die dadurch gekennzeichnet ist, dass die erste Sperrschicht 2 ein mikroporöser Film ist oder aufgrund ihrer chemischen Beschaffenheit eine hohe Affinität für Wassermoleküle besitzt und/oder dass die zweite Sperrschicht 3 ein Vliesstoff, insbesondere ein Meltblown-Vlies ist.

Eine Dachunterspannbahn, die dadurch gekennzeichnet ist, dass die erste Sperrschicht 2 und/oder die zweite Sperrschicht 3 aus einem polymeren Werkstoff, einem Polyolefin, Polypropylen oder Polyethylen besteht.

Eine Dachunterspannbahn, die dadurch gekennzeichnet ist, dass die anfängliche Dichtigkeit der ersten Sperrschicht 2 oberhalb von 1500 mm Wassersäule liegt und bei einer Freibewitterung im Sommer spätestens nach 3 Monaten, im Winter spätestens nach 6 Monaten und ansonsten spätestens nach einem Jahrzehnt um mindestens 50 % oder 70 % abnimmt oder auf Werte unter 500 mm Wassersäule absinkt und/oder dass die anfängliche Dichtigkeit der zweiten Sperrschicht 3 zumindest über 10 Jahre maximal um 20 % oder 10 % abnimmt und/oder in einem Bereich zwischen 500 mm bis 1500 mm Wassersäule bleibt.

Eine Dachunterspannbahn, die gekennzeichnet ist durch eine zwischen den beiden Sperrschichten 2, 3 angeordnete Trennschicht 5.

Eine Dachunterspannbahn, die dadurch gekennzeichnet ist, dass eine erste freie Oberfläche der Dachunterspannbahn von einer ersten Deckschicht 1, insbesondere von einem Spunbond-Vlies und/oder dass eine zweite freie Oberfläche der Dachunterspannbahn von einer zweiten Deckschicht 6, insbesondere von einem Spunbond-Vlies gebildet ist.

Eine Dachunterspannbahn, die gekennzeichnet ist durch eine insbesondere von einem Gittergewebe ausgebildete Stabilisierungsschicht 4.

Alle offenbarten Merkmale sind (für sich, aber auch in Kombination untereinander) erfindungswesentlich. In die Offenbarung der Anmeldung wird hiermit auch der Offenbarungsinhalt der zugehörigen/beigefügten Prioritätsunterlagen (Abschrift der Voranmeldung) vollinhaltlich mit einbezogen, auch zu dem Zweck, Merkmale dieser Unterlagen in Ansprüche vorliegender Anmeldung mit aufzunehmen. Die Unteransprüche charakterisieren, auch ohne die Merkmale eines in Bezug genommenen Anspruchs, mit ihren Merkmalen eigenständige erfinderische Weiterbildungen des Standes der Technik, insbesondere um auf Basis dieser Ansprüche Teilanmeldungen vorzunehmen. Die in jedem Anspruch angegebene Erfindung kann zusätzlich ein oder mehrere der in der vorstehenden Beschreibung, insbesondere mit Bezugsziffern versehene und/oder in der Bezugsziffernliste angegebene Merkmale aufweisen. Die Erfindung betrifft auch Gestaltungsformen, bei denen einzelne der in der vorstehenden Beschreibung genannten Merkmale nicht verwirklicht sind, insbesondere soweit sie erkennbar für den jeweiligen Verwendungszweck entbehrlich sind oder durch andere technisch gleichwirkende Mittel ersetzt werden können.

**Liste der Bezugszeichen**

| | | | |
|---|---|---|---|
| 1 | Deckschicht | t0 | Zeit |
| 2 | erste Sperrschicht | t1 | Zeit |
| 3 | zweite Sperrschicht | | |
| 4 | Stabilisierungsschicht | | |
| 5 | Trennschicht | | |
| 6 | Deckschicht | A | erste Folie |
| | | B | zweite Folie |
| | | D | Dichtigkeit |

## Patentansprüche

1. Dachunterspannbahn mit einer ersten Sperrschicht (2) und einer zweiten Sperrschicht (3), die jeweils eine Durchlässigkeit für Wasserdampf aufweisen, wobei die erste Sperrschicht (2) eine erste Dichtigkeit für flüssiges Wasser aufweist, die höher ist, als eine zweite Dichtigkeit für flüssiges Wasser der zweiten Sperrschicht (3), **dadurch gekennzeichnet, dass** die Altersstabilität der ersten Dichtigkeit geringer ist, als die Altersstabilität der zweiten Dichtigkeit.

2. Dachunterspannbahn nach Anspruch 1, **dadurch gekennzeichnet, dass** die erste Sperrschicht (2) und die zweite Sperrschicht (3) sich hinsichtlich ihrer chemischen Zusammensetzung, ihres mechanischen Aufbaus und/oder hinsichtlich ihrer Schichtdicke unterscheiden.

3. Dachunterspannbahn nach einem der vorhergehenden Ansprüche, **dadurch gekennzeichnet, dass** die erste Dichtigkeit während der bestimmungsgemäßen Verwendung der Dachunterspannbahn unter die zweite Dichtigkeit absinkt.

4. Dachunterspannbahn nach einem der vorhergehenden Ansprüche, **dadurch gekennzeichnet, dass** bei einer Freibewitterung im Sommer die erste Dichtigkeit nach spätestens 3 Monaten unter die zweite Dichtigkeit, bei einer Freibewitterung im Winter spätestens nach 6 Monaten unter die zweite Dichtigkeit und ansonsten innerhalb des ersten Jahrzehnts der Verwendung unter die zweite Dichtigkeit absinkt.

5. Dachunterspannbahn nach einem der vorhergehenden Ansprüche, **dadurch gekennzeichnet, dass** die erste Sperrschicht (2) ein mikroporöser Film ist oder aufgrund ihrer chemischen Beschaffenheit eine hohe Affinität für Wassermoleküle besitzt.

6. Dachunterspannbahn nach einem der vorhergehenden Ansprüche, **dadurch gekennzeichnet, dass** die zweite Sperrschicht (3) ein Vliesstoff, insbesondere ein Meltblown-Vlies ist.

7. Dachunterspannbahn nach einem der vorhergehenden Ansprüche, **dadurch gekennzeichnet, dass** die erste Sperrschicht (2) und/oder die zweite Sperrschicht (3) aus einem polymeren Werkstoff, einem Polyolefin, Polypropylen oder Polyethylen besteht.

8. Dachunterspannbahn nach einem der vorhergehenden Ansprüche, **dadurch gekennzeichnet, dass** die anfängliche Dichtigkeit der ersten Sperrschicht (2) oberhalb von 1500 mm Wassersäule liegt und bei einer Freibewitterung im Sommer spätestens nach 3 Monaten, im Winter spätestens nach 6 Monaten und ansonsten spätestens nach einem Jahrzehnt um mindestens 50 % oder 70 % abnimmt oder auf Werte unter 500 mm Wassersäule absinkt.

9. Dachunterspannbahn nach einem der vorhergehenden Ansprüche, **dadurch gekennzeichnet, dass** die anfängliche Dichtigkeit der zweiten Sperrschicht (3) zumindest über 10 Jahre maximal um 20 % oder 10 % abnimmt und/oder in einem Bereich zwischen 500 mm bis 1500 mm Wassersäule bleibt.

10. Dachunterspannbahn nach einem der vorhergehenden Ansprüche, **gekennzeichnet durch** eine zwischen den beiden Sperrschichten (2, 3) angeordnete Trennschicht (5).

11. Dachunterspannbahn nach einem der vorhergehenden Ansprüche, **dadurch gekennzeichnet, dass** eine erste freie Oberfläche der Dachunterspannbahn von einer ersten Deckschicht (1), insbesondere von einem Spunbond-Vlies.

12. Dachunterspannbahn nach einem der vorhergehenden Ansprüche, **dadurch gekennzeichnet, dass** eine zweite freie Oberfläche der Dachunterspannbahn von einer zweiten Deckschicht (6), insbesondere von einem Spunbond-Vlies gebildet ist.

13. Dachunterspannbahn nach einem der vorhergehenden Ansprüche, **gekennzeichnet durch** eine insbesondere von einem Gittergewebe ausgebildete Stabilisierungsschicht (4).
